# EUROPEAN PATENT APPLICATION

(11) **EP 3 418 201 A1**
(43) Date of publication of application: **26.12.2018**
(21) Application number: 17382389.9
(22) Date of filing: 22.06.2017
(51) Int. Cl.: B64D 39/00, B60L 11/18, H01R 13/00, H01R 24/00

(54) **IN-FLIGHT ELECTRIC RELOADING SYSTEM**

(71) Applicant: Airbus Defence and Space SA, 28906 Getafe Madrid (ES)
(72) Inventor: MARTÍNEZ VÁZQUEZ, Bruno, 28906 GETAFE (Madrid) (ES)
(74) Representative: Herrero & Asociados, S.L.

(57) **Abstract**

The invention refers to a system for aerial reloading of electric and/or hybrid aircrafts, either manned or unmanned aircrafts (UAV's). The system comprises interconnectable nozzle (1) and coupling devices (10) provided with electric terminals and configured such as when the nozzle and coupling devices are plugged together, their electric terminals are electrically in contact. A first electric isolating cover (6) is mounted with the nozzle to isolate the electric terminals of the nozzle, such as when the nozzle device is plugged into the coupling device, the nozzle moves first cover from an extended position to a retracted position and the electric terminals are accessible. Similarly, a second electric isolating cover (15) is mounted with the coupling, such as when the nozzle device is plugged into the coupling device, the second cover moves from the extended position to the retracted position.

## Description

### Object of the invention

The present invention refers to systems for aerial reloading of electric and/or hybrid aircrafts, either manned or unmanned aircrafts (UAV's).

An object of the invention is to provide a reliable and safe system for electrically reloading hybrid and/or electric aircrafts, assuring correct coupling and avoiding short-circuits between electric terminals.

### Background of the invention

In the field of electrically powered aircrafts, different projects have been proposed recently either for manned or unmanned aircrafts (UAV's). One of the most significant challenges in the operation of the electrically powered aircrafts, is its lack of autonomy.

Different solutions have been presented to provide aerial re-loading capability for electric platforms, such as UAV's. For example US patent Publication US-2015/0336677A1 and US patent US-8639395B2, propose the use of reloading systems similar to the classical fuel refuelling of aircrafts based on hose and drogue system.

Similarly, the European patent application EP-2644509 A2 disclose the adaptation of an existing refuelling hose, for transmitting data and/or electrical energy for aerial reloading.

However, all these known solutions are conceptual proposals that do not provide constructional details of the coupling devices for the necessary interface between tanker and receiver. Additionally, these known systems require an active power in order to operate and to assure correct coupling between hose and drogue devices.

Furthermore, none of these known solutions have taken into consideration a key design requirement in aerial electric reloading, such as the electric isolation and sealing of the system in order to allow the system to operate safely.

Furthermore, none of the prior-art solutions efficiently solve critical requirements of an aerial electric reloading operation, such as:
- efficient electric isolation to prevent short-circuits between terminals,
- correct alignment between drogue and hose,
- efficient latching mechanism between drogue and hose.

### Summary of the invention

The present invention is defined in the attached independent claim.

The electric reloading system of the invention it is also based on a traditional hose and drogue concept, and it is adapted for transmitting electric energy between two aircrafts during a flight, wherein one aircraft is acting as a tanker and therefore incorporates a source of electric energy, and another one is acting as receiver.

The system of the invention solves the above-mentioned drawbacks of the prior art, by providing releasable electric isolation means to isolate the electric terminals of both the hose and drogue devices, such any short circuits or accidental electric discharges are avoided. Only when the hose and the drogue are correctly coupled to each other, the isolations means are released and an electric continuity between the hose and the drogue is established.

More in detail, the invention refers to a reloading system comprising inter-connectable nozzle device (drogue) and coupling device (hose), both devices provided with electric terminals and configured such as when the nozzle and coupling devices are plugged together, their electric terminals are electrically in contact so that an electric current can flow through them.

The system further comprises a first electric isolating cover mounted with the nozzle, wherein the electric isolating cover is displaceable between an extended protective position in which it covers the electric terminals of the nozzle so that these terminals are hidden, and a retracted position in which the electric terminals are accessible. The nozzle and coupling devices are configured such as when the nozzle device is plugged into the coupling device, the first cover moves from the extended position to the retracted position to allow electric connection between terminals.

Preferably, the coupling device also has an electric isolating cover that is displaceable between an extended protective position in which it covers the electric terminals of the coupling device so that these terminals are hidden, and a retracted position in which the electric terminals are accessible. The nozzle and coupling devices are additionally configured such as, when the nozzle device is plugged into the coupling device, the second cover moves from the extended position to the retracted position to allow electric connection between terminals.

Therefore, only when the nozzle is correctly plugged into the coupling device, both isolating covers are released, and only then the electric terminals are accessible and electrical connection can be established.

Preferably, the first and second isolation covers are biased towards their extended position by means of compression springs.

The invention also refers to a fleet of aircrafts comprising manned and/or unmanned aircrafts (UAV's), that incorporate the above-described in-flight reloading system, such as at least one aircraft of the fleet acting as a tanker (electric power provider) has installed the coupling device and the associated control systems, and at least one aircraft of the fleet is an electric or hybrid powered aircraft acting as a receiver, that has installed the nozzle and the associated control systems.

### Brief description of the drawings

The invention and preferred embodiments thereof are henceforth described with reference to the accompanying drawings, wherein:
Figure 1.- shows a cross-sectional view of a nozzle of a system according to a preferred embodiment of the invention.
Figure 2.- shows a cross-sectional view of a coupling device of a system according to the referred embodiment of the invention.
Figure 3.- shows a cross-sectional view of the nozzle and coupling device of figures 1 and 2, plugged together.
Figure 4.- shows an electric diagram of this preferred embodiment of the invention.

### Preferred embodiment of the invention

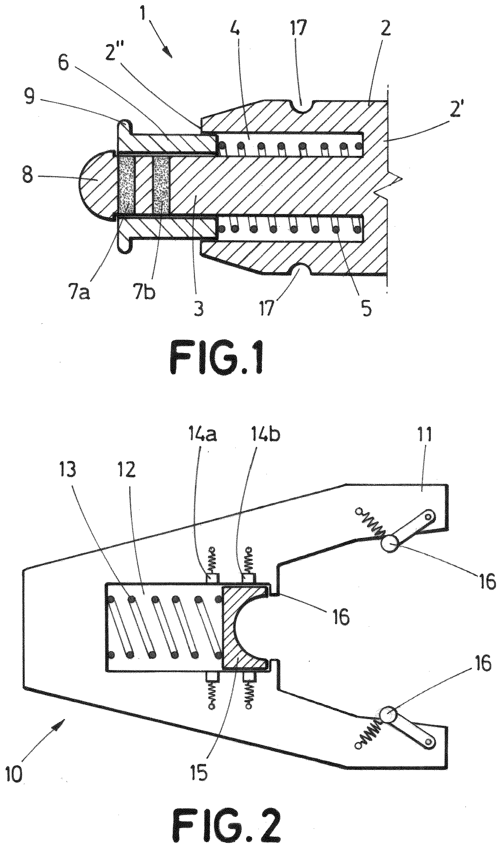

Figure 1 shows the nozzle (1) comprising a housing (2) having a closed base (2') and an open base (2"). A stem (3) has a part placed inside the housing (2) and a part protruding outside the housing (2), such as a cavity (4) is formed between the stem (3) and the housing (2) and around the stem (3). The housing and the stem are preferably cylindrical.

A first compression spring (5) is housed inside said cavity (4) and placed around the stem (3). A first isolation cover (6) is a sleeve mounted on the stem (3), such as the first spring (5) pushes the cover (6) towards the free end of the stem (3).

The nozzle (3) has two ring-shaped electric terminals (7a,7b) fitted to the part of the stem protruding outside the housing. The stem (3) has a head (8) right at its free end. This head (8) is wider than then stem (3) and thus acts as a stop for the first cover (6). In turn, the first cover (6) has a lib (9) around one of its edges.

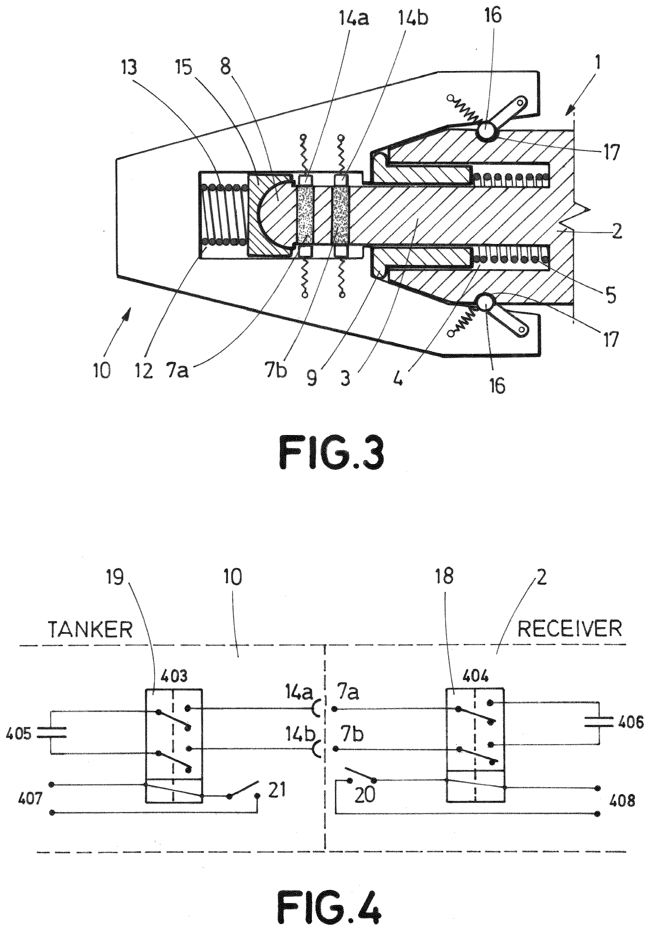

As it can be observed in the figures, the first isolating cover (6) is displaceable between an extended protective position (figure 1) in which it covers the electric terminals (7a,7b) of the nozzle (1), and a retracted position (figure 3) in which the first isolation cover (6) is housed within the cavity (4), and the electric terminals (7a,7b) are accessible. In the extended position the first cover (6) is retained by the head (8), whereas in the retracted position the first cover (6) is retained by the contact of the lib (9) with the housing (2).

In turn, the coupling device (10) has a skirt (11) that forms a space configured for receiving and housing at least in part the nozzle (1) when the nozzle is plugged with the coupling device as shown in figure 3.

Additionally, the coupling device (10) comprises a chamber (12), two ring-shaped electric terminals (14a,14b) mounted inside said chamber, a second spring (13) and a second isolating cover (15) placed inside said chamber (12). The second cover (15) is biased by the spring (13) towards its extended position, wherein it is retained by an internal lib (16) formed in the coupling device (10).

The nozzle (1) and coupling device (10) are preferably made of an insulating material, and have respectively a male and female configuration, so that, when they are plugged together at least part of the nozzle (1) is housed inside the coupling device (10) as shown in figure 3. Preferably, part of the nozzle has a frusto-conical configuration, matching a complementary frusto-conical shape of the space defined by the skirt (11).

Additionally, the nozzle (1) and coupling device (10) are configured such as when the nozzle is plugged into the coupling device, the lib (9) is contacted by the inner lib (16) so that the first cover (6) is moved against the action of the first spring (5) to its retracted position (figure 1).

Furthermore, the nozzle (1) and coupling device (10) are additionally configured such as, when the nozzle is plugged into the coupling device, the head (8) contact with the second cover (15) which is thereby moved to its retracted positon against the action of the second spring (13).

Therefore, when nozzle (1) and coupling device (10) are plugged together, the respective isolation covers (6,15) are retracted and the electric terminals (7a,7b) of the nozzle (1) and the electric terminals (14a,14b) of the coupling device (10) are electrically connected as shown in figure (3). In this situation an electric current can flow through the nozzle and coupling device for reloading an electric aircraft. For that purpose, the electric terminals (14a,14b) are extendable, such as when the second cover (15) is retracted these terminals (14a,14b) extend to get in contact with contacts (7a,7b). For example, the electric terminals (14a,14b) can be biased by compression springs.

To assure the latching between the nozzle and the coupling device during the reloading operation, some latches (16) actuated by dedicated springs, are fitted internally to the skirt (11), so when the nozzle is fully inserted into the coupling device, the latches (16) extends and engage with corresponding groves (17) formed on the outer surface of the body (2).

Latching force depends on strength of the springs and it is calculated in such a way that, without any external assistance:
- the receiver aircraft advancing to the tanker, the nozzle can overcome the latches force while entering the coupling
- the receiver aircraft retracting from the tanker, the nozzle can overcome the latches force while exiting the coupling.

Figure 4 shows an electric diagram of the system wherein it can be observed that the terminals (7a,7b) of the nozzle and the terminals (14a,14b) of the coupling device, are connectable to allow an electric current to flow through them. Preferably in this example, the terminals (7a,7b) are respectively connected with switches of a first relay (18) which operation is controlled by a first stroke sensor (20). The switches of a relay (18) are normally open, thus, no current flows the terminals (7a,7b).

The first stroke sensor (20) is provided in the nozzle for detecting the fully retracted position of the first cover (6), so that only when the first cover (6) is fully retracted (figure 3), the stroke sensor (20) closes the relay switches to allow current circulation.

Similarly, a second stroke sensor (21) is provided in the coupling device for detecting the fully retracted position of the second cover (15), so that only when the second cover (15) is fully retracted (figure 3), the second stroke sensor (21) closes the second relay switches to allow current circulation.

Power supply for relays 403 and 404 is generated respectively by the tanker or receiver electrical system, or via a dedicated device embodied respectively by the tanker or the receiver.

When the reloading operation has been completed, the nozzle (1) and coupling device (10) are unplugged, and that moment both covers (6,15) return to their extended positions biased by the respective springs, in order to electrically isolate the electric terminals (7a,7b,14a,14b).

## Claims

1. An in-flight electric reloading system comprising inter-connectable nozzle and coupling devices provided with electric terminals and configured such as when the nozzle and coupling devices are plugged together, their electric terminals are electrically in contact, **characterised in that**
the system further comprises a first electric isolating cover mounted with the nozzle, wherein the electric isolating cover is displaceable between an extended protective position in which it covers the electric terminals of the nozzle, and a retracted position in which the electric terminals are accessible,
and wherein the nozzle and coupling devices are configured such as when the nozzle device is plugged into the coupling device, the first cover moves from the extended position to the retracted position.

2. System according to claim 1, further comprising a second electric isolating cover mounted with the coupling, wherein the electric isolating cover is displaceable between an extended protective position in which it covers the electric terminals of the coupling, and a retracted position in which the electric terminals are accessible, and wherein the nozzle and coupling devices are additionally configured such as, when the nozzle device is plugged into the coupling device, the second cover moves from the extended position to the retracted position.

3. System according to claim 1, further comprising a first spring arranged for biasing the first cover towards its extended position.

4. System according to claims 2 or 3, further comprising a second spring arranged for biasing the second cover towards its extended position.

5. System according to any of the preceding claims, wherein the nozzle and coupling devices have respectively a male and female configuration, so that, when they are plugged together at least part of the nozzle is inside the coupling device.

6. System according to any of the preceding claims, wherein the nozzle and coupling devices are made of an insulating material.

7. System according to any of the preceding claims, wherein the nozzle comprises a housing and a stem having a part placed inside the housing and a part protruding outside the housing, such as a cavity is formed between the stem and the housing and around the stem, and wherein the first spring is placed inside said cavity and around the stem, and wherein the first isolation cover is a sleeve mounted on the stem, such as the first cover is insertable into the cavity against the biasing action of the first spring.

8. System according to claim 7, wherein the nozzle further comprises two ring-shaped electric terminals and fitted to the part of the stem protruding outside the housing.

9. System according to any of the preceding claims, wherein the coupling device has a skirt that forms a space configured for housing at least in part the nozzle when the nozzle is plugged with the coupling device.

10. System according to any of the preceding claims, wherein the coupling device comprises a chamber and two ring-shaped electric terminals mounted inside said chamber, and wherein the second spring and the second isolating cover are placed inside said chamber.

11. System according to any of the preceding claims, further comprising a first stroke sensor (20) provided in the nozzle for detecting the fully retracted position of the first cover (6), so that only when the first cover (6) is fully retracted, the stroke sensor (20) can close the relay switches to allow current circulation.

12. System according to any of the preceding claims, further comprising a second stroke sensor (21) provided in the coupling device for detecting the fully retracted position of the second cover (15), so that only when the second cover (15) is fully retracted, the second stroke sensor (21) can close the second relay switches to allow current circulation.
